(19) Europäisches Patentamt
European Patent Office
Office européen des brevets

(11) **EP 3 486 755 A1**

(12) **EUROPEAN PATENT APPLICATION**
published in accordance with Art. 153(4) EPC

(43) Date of publication:
**22.05.2019 Bulletin 2019/21**

(51) Int Cl.:
***G06F 3/041*** (2006.01)

(21) Application number: **16911907.0**

(22) Date of filing: **08.08.2016**

(86) International application number:
**PCT/CN2016/093886**

(87) International publication number:
**WO 2018/027450 (15.02.2018 Gazette 2018/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **ZHANG, Junyong**
**Shenzhen**
**Guangdong 518129 (CN)**
• **WANG, Chingyi**
**Shenzhen**
**Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **DISPLAY SCREEN**

(57) Embodiments of the present invention relate to a display screen, including a glass substrate. The display screen further includes: a first electrode plate on a surface of the glass substrate; a second electrode plate at a lower part of the glass substrate, where the first electrode plate and the second electrode plate constitute a capacitor, and there is a space within a preset width range between the first electrode plate and the second electrode plate, so that when external pressure is applied to the display screen, the first electrode plate is elastically deformed; and a controller, connected to the first electrode plate and configured to: when external pressure is applied to the display screen, calculate a changed capacitance value based on a change of a distance between the first electrode plate and the second electrode plate; and calculate a pressure value based on the changed capacitance value. The first electrode plate is disposed as an electrode material on the substrate, so that a material used for separately disposing a pressure sensor can be saved. The electrode material is coated or printed on the substrate, so that a thickness of the display screen can be reduced.

FIG. 4

## Description

## TECHNICAL FIELD

The present invention relates to the field of semiconductor device technologies, and in particular, to a display screen installed on an electronic device.

## BACKGROUND

Currently, a touchscreen is a main human-computer interaction interface of a personal mobile communications device, such as a tablet computer, a smartphone, a medical device, or an in-vehicle center console, and an integrated information terminal. Featuring multitouch, quick response, a long service life, and the like, the touchscreen becomes a main technology used for touch interaction of small- and medium-sized information terminals. An existing touchscreen device such as a mobile phone not only can perceive a screen touch location, but also can perceive a touch pressure value. Capacitive pressure induction has been applied on the mobile phone. However, a principle mainly depends on a capacitor constituted by two constant electrodes on the mobile phone. When pressure exists, a distance between the two electrodes changes, a capacitance changes, and pressure detection is required.

In existing capacitive pressure induction, one layer of pressure induction sensor needs to be added. The pressure induction sensor is generally made of a flexible printed circuit board (Flexible Printed circuits board, FPC for short), and a process has high costs.

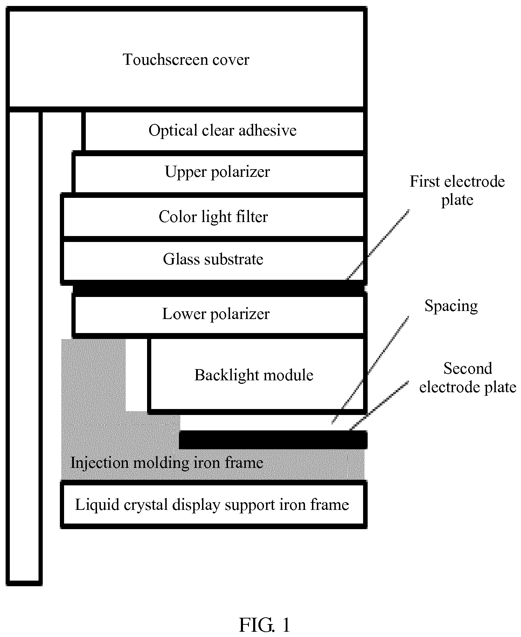

FIG. 1 shows a schematic diagram of a local internal structure of an existing mobile phone. A specific pressure measurement principle is: a ground plane in an array substrate (which is not shown in the figure, and specifically located on an upper part of a light guide plate) inside the mobile phone and a pressure sensor in FIG. 1 constitute two electrode plates of a capacitor. When a screen of the mobile phone is pressed, and when the ground plane is deformed, a distance between the two electrode plates is reduced because there is a space inside the screen of the mobile phone (a location displayed by the space in FIG. 1). It is shown in the figure that a space thickness changes, that is, a space thickness is reduced. A changed capacitance value is inversely proportional to the distance between the two electrode plates. Therefore, when the distance between the electrode plates is reduced, capacitance increases. However, as shown in FIG. 1, to accurately measure the changed capacitance value, an injection iron frame and an iron frame further need to be added inside the mobile phone. An objective is to ensure stability of the mobile phone. When the screen is pressed, only a location on a side of the ground plane changes, and a location on a side of the pressure sensor does not change due to the injection iron frame and the iron frame. Therefore, an accurate changed distance between the two electrode plates can be obtained. However, because the pressure sensor needs to be adhered outside the screen, and also needs to depend on the injection iron frame and the iron frame for ensuring stability, a framework thickness of the mobile phone further increases. In addition, a specific thickness increases because the pressure sensor is made of the FPC, and made by means of lamination. Consequently, an internal structure of the mobile phone is relatively complex, and production costs are relatively high.

## SUMMARY

According to a first aspect, the present invention provides a display screen, and the display screen further includes: a glass substrate; a first electrode plate on a surface of the glass substrate; a second electrode plate at a lower part of the glass substrate, where the first electrode plate and the second electrode plate constitute a capacitor, and there is a space within a preset width range between the first electrode plate and the second electrode plate, so that when external pressure is applied to the display screen, the first electrode plate is elastically deformed; and a controller, connected to the first electrode plate and configured to: when external pressure is applied to the display screen, calculate a changed capacitance value based on a change of a distance between the first electrode plate and the second electrode plate; and calculate a pressure value based on the changed capacitance value.

With reference to the first aspect, in a first possible implementation of the first aspect, the width range of the space between the first electrode plate and the second electrode plate is greater than or equal to 0.2 mm and less than or equal to 2.5 mm.

With reference to the first aspect or the first possible implementation of the first aspect, in a second possible implementation of the first aspect, the space between the first electrode plate and the second electrode plate is filled with air or a substance that does not hinder elastic deformation of the first electrode plate.

With reference to the first aspect, in a third possible implementation of the first aspect, an electrode material is coated or printed on the surface of the glass substrate, to constitute the first electrode plate.

With reference to the first aspect, in a fourth possible implementation of the first aspect, the second electrode plate is a front housing or a liquid crystal display module LCM iron frame of the display screen.

With reference to any one of the first aspect, or the first to the fourth possible implementations of the first aspect, in a fifth possible implementation of the first aspect, there are at least two first electrode plates, and each electrode plate and the second electrode plate constitute a capacitor.

Based on the foregoing technical solution, according to the display screen provided in the embodiments of the present invention, the first electrode plate is disposed as the electrode material on the glass substrate, so that a material used for separately disposing a pressure sensor can be saved. The electrode material is coated or printed on the glass substrate, so that a thickness of the display screen can be reduced. Further, an injection iron frame and an iron frame that are used for fixation are not required in the display screen, so that the thickness of the display screen is further reduced.

## BRIEF DESCRIPTION OF DRAWINGS

FIG. 1 is a simple schematic structural diagram of a display screen inside a mobile phone in the prior art;
FIG. 2 is a schematic structural diagram in which there are a plurality of first electrode plates according to an embodiment of the present invention;
FIG. 3 is a schematic structural diagram in which an electrode plate distance changes when a display screen is externally pressed according to an embodiment of the present invention;
FIG. 4 is a schematic diagram of a local structure of a display screen according to an embodiment of the present invention;
FIG. 5 is another schematic diagram of a local structure of a display screen according to an embodiment of the present invention;
FIG. 6 is still another schematic diagram of a local structure of a display screen according to an embodiment of the present invention;
FIG. 7 is yet another schematic diagram of a local structure of a display screen according to an embodiment of the present invention;
FIG. 8 is still yet another schematic diagram of a local structure of a display screen according to an embodiment of the present invention; and
FIG. 9 is a further schematic diagram of a local structure of a display screen according to an embodiment of the present invention.

## DESCRIPTION OF EMBODIMENTS

The technical solutions of the present invention are further described in detail with reference to accompanying drawings and embodiments as follows:
To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

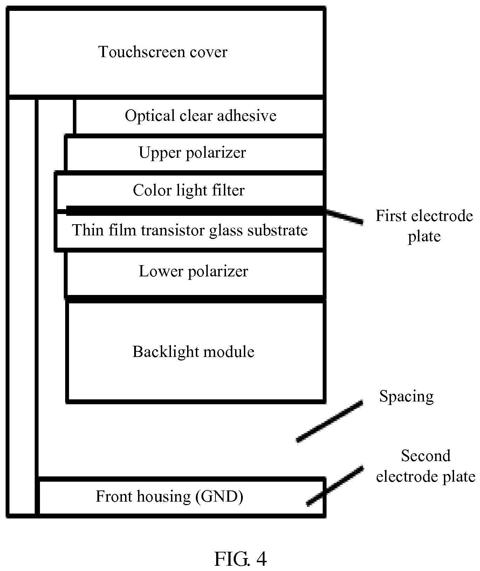

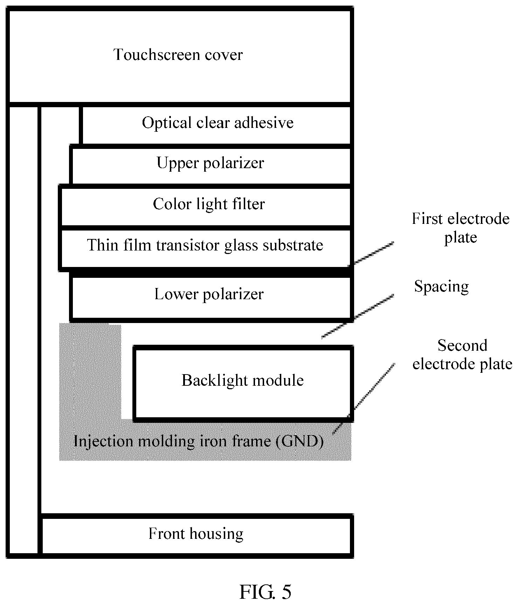

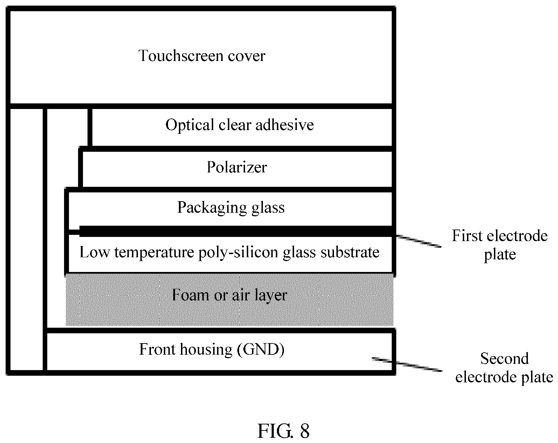

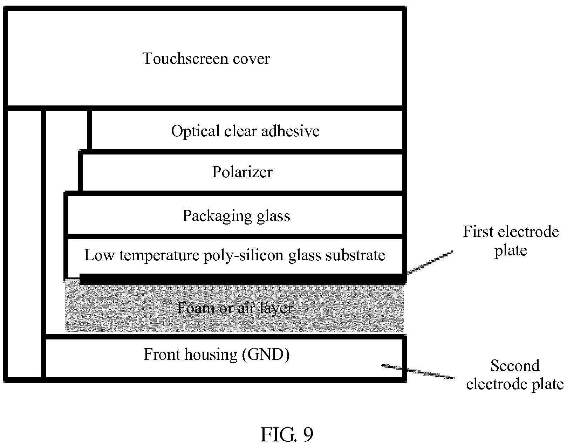

A display screen provided in an embodiment of the present invention may include a glass substrate, a first electrode plate, a second electrode plate, and a controller (the controller is not shown in the figure).
The first electrode plate is located on a surface of the glass substrate, and the surface may be an upper surface or a lower surface. The second electrode plate is at a lower part of the glass substrate. In addition, the second electrode plate and the first electrode plate jointly constitute a capacitor. There is a space within a preset width range between the first electrode plate and the second electrode plate, so that when external pressure is applied to the display screen, the first electrode plate is elastically deformed. Preferably, the width range of the space may be greater than or equal to 0.2 mm and less than or equal to 2.5 mm. Further, the space may be filled with air, or some substances that do not hinder elastic deformation of the first electrode plate, for example, foam. Certainly, the filled substance is required to be a nonconductive substance, is located between the first electrode plate and the second electrode plate, and is used as an electrolyte of the capacitor. Optionally, the display screen may further include the following components based on different types.
For example, when the display screen is a display screen of a thin film transistor (Thin Film Transistor, TFT for short) type, the display screen may further include a touchscreen cover, an optical clear adhesive, a polarizer (including an upper polarizer and a lower polarizer), a color light filter, a liquid crystal (not shown in the figure), and a backlight module. The polarizer generally includes upper and lower layers. One layer is above the color light filter, and is the upper polarizer; and the other layer is below the glass substrate, and is the lower polarizer. Functions of the touchscreen cover, the polarizer, the color light filter, the liquid crystal, and the backlight module are the same as functions in the prior art, and details are not described herein. In addition, there is a space between the first electrode plate and the second electrode plate. Generally, there may be a space between the backlight module and a front housing (shown in FIG. 4); or there may be a space between the lower polarizer and the backlight module (shown in FIG. 5). The space is filled with air. FIG. 4 to FIG. 7 show schematic structural diagrams of a specific TFT display screen. However, all the schematic diagrams in FIG. 4 to FIG. 7 are local schematic diagrams. A right side and a left side of the figure are symmetrical, and no specific drawing is provided herein.
When the display screen is a display screen of an active-matrix organic light emitting diode (Active-matrix organic light emitting diode, AMOLED for short) type, the display screen may further include a touchscreen cover, an optical clear adhesive polarizer, packaging glass, an organic light emitting layer (not shown in the figure), a TFT (not shown in the figure), and the like. The organic light emitting layer is actually integrated into the TFT. Similarly, functions of the polarizer, the optical clear adhesive, the packaging glass, the organic light emitting layer, the TFT, and the like are the same as functions in the prior art, and details are not described herein. The space between the first electrode plate and the second electrode plate is filled with foam, or certainly, may be filled with air. The space may be specifically between the glass substrate and the front housing. FIG. 8 and FIG. 9 show schematic structural diagrams of a specific AMOLED display screen. Similar to FIG. 4 to FIG. 7, FIG. 8 and FIG. 9 are also local schematic diagrams. A right side and a left side of the figure are symmetrical, and there is no specific drawing herein.

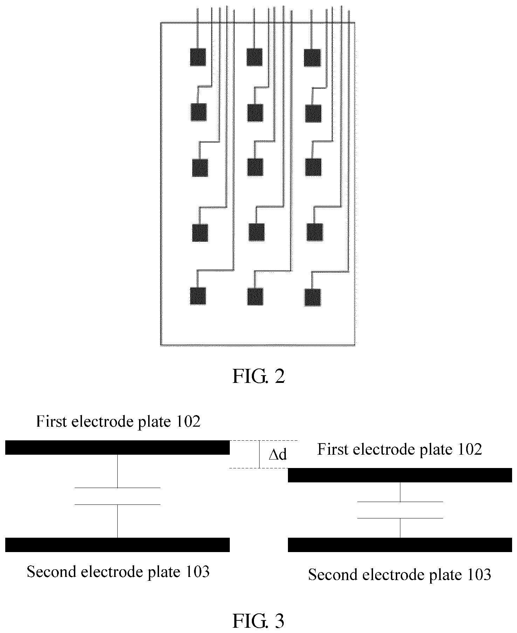

In a possible form, an electrode material is coated or printed on the upper surface of the glass substrate, so that the first electrode plate may be constituted. In another possible form, an electrode material may be coated or printed on the lower surface of the glass substrate, to constitute the first electrode plate. Optionally, there may be at least two first electrode plates. Specifically, as shown in FIG. 2, when there are a plurality of first electrode plates, each first electrode plate and the second electrode plate constitute a capacitor. That is, a plurality of capacitors are constituted. Therefore, when the display screen is externally pressed, pressure values at different coordinate locations may be detected. It should be noted herein that there may be two types of glass substrates: a glass substrate of a TFT type and a glass substrate of a low temperature poly-silicon (Low Temperature Poly-silicon, LTPS for short) type. A type of the glass substrate is specifically determined based on the type of the display screen.

The second electrode plate may be a front housing of the display screen or an LCD module (LCD Module, LCM for short) iron frame of the display screen. Whether the second electrode plate is specifically the front housing or the LCM iron frame similarly needs to be determined based on a type of the display screen.

In a specific example, when the display screen is a display screen of the TFT type, the glass substrate is a TFT glass substrate, and the second electrode plate may be the front housing or the LCM iron frame (the LCM iron frame is displayed as an injection molding iron frame in FIG. 4 to FIG. 7). However, when the display screen is a display screen of the AMOLED type, the glass substrate is an LTPS glass substrate, and the second electrode plate is only the front housing.

It should be understood that an existing display screen includes an LCD support iron frame and an LCM iron frame that are used for supporting a pressure sensor. However, in the present invention, the pressure sensor is not used as an independent device, and instead, the pressure sensor is coated or printed on the glass substrate as the first electrode plate. Therefore, the LCD support iron frame is not required to support the pressure sensor. The LCM iron frame instead of the LCD support iron frame may be used as the second electrode plate. The controller may be connected to the first electrode plate by using a flexible printed circuit (Flexible Printed Circuit (Board), FPC for short). When external pressure is applied to the display screen, the controller may calculate a changed capacitance value based on a change of a distance between the first electrode plate and the second electrode plate, and indirectly calculate a pressure value based on the changed capacitance value.

Specifically, as shown in FIG. 3, FIG. 3 is a schematic structural diagram in which an electrode plate distance changes when a display screen is externally pressed.

When external pressure is applied to the display screen, the first electrode plate is deformed, and is extruded downwards. In this case, the distance between the first electrode plate and the second electrode plate is reduced. A capacitance calculation formula is:

$$\Delta C = \frac{\varepsilon S}{4\pi k \Delta d} \quad (1\text{–}1),$$

where
$\Delta C$ is a changed capacitance value, $\varepsilon$ is a dielectric constant, S is an area of overlap between two electrode plates, k is a static power constant, and $\Delta d$ is a change of a distance between the two electrode plates.

Therefore, the controller may indirectly calculate the pressure value based on the changed capacitance value by performing a series of processing, such as capacitance-voltage conversion, filtering, and analog to digital converter sampling.

It should be understood that the first electrode plate is a pressure sensor, and the controller may be a touch chip. In addition, the display screen may further include a touch sensor.

It should be understood that a process of calculating pressure by the touch chip may specifically include the follows:

First, the capacitor constituted by the first electrode plate and the second electrode plate provides a constant voltage, and the voltage may be provided by a constant voltage source or in another manner. First, the capacitor is charged, and is discharged after being fully charged. An objective is to first determine a current of the capacitor, and then determine an initial capacitance value of the capacitor. When external pressure is applied to the display screen, both the pressure sensor and the touch sensor may detect a capacitance change. Because the voltage is constant, the current changes. In this case, the changed capacitance value may be calculated. Then, the capacitance value may be converted into a voltage value by using an amplifier. An analog signal of the voltage value is obtained by using an integrator circuit. After the analog signal is obtained, an analog-to-digital conversion circuit converts the analog signal into a digital signal that can be processed. A numerical signal of the voltage value is in a one-to-one correspondence with the pressure value. Therefore, when the voltage value is determined, the pressure value is also determined.

Certainly, the present invention merely and simply describes a principle of converting a capacitance value into a pressure value. How to specifically calculate the pressure value is the prior art, and details are not described herein.

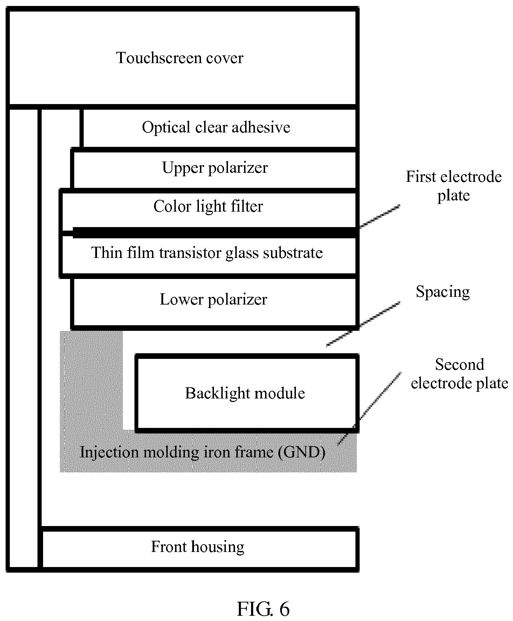

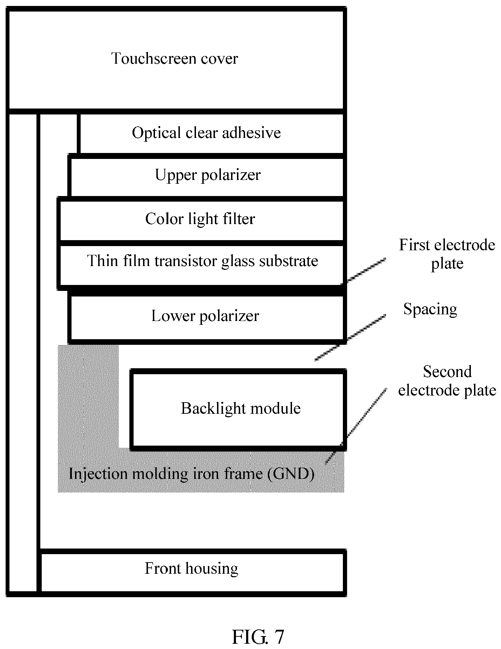

FIG. 4 to FIG. 9 are respectively specific example diagrams of types and locations of the first electrode plate and the second electrode plate when the display screen is a TFT display screen or an AMOLED display screen. In FIG. 4, the display screen is a TFT display screen, the first electrode plate is constituted by coating or printing an electrode material on an upper surface of the TFT glass substrate, and the second electrode plate is the front housing of the display screen. In FIG. 5, the display screen is a TFT display screen, the first electrode plate is constituted by coating or printing an electrode material on a lower surface of the TFT glass substrate, and the second electrode plate is the front housing of the display screen. In FIG. 6, the display screen is a TFT display screen, the first electrode plate is the same as that in FIG. 4, and the second electrode plate is an LCM iron frame. In FIG. 7, the display screen is a TFT display screen, the first electrode plate is the same as that in FIG. 5, and similarly, the second electrode plate is an LCM iron frame.

In FIG. 8, the display screen is an AMOLED display screen, the first electrode plate is constituted by coating or printing an electrode material on an upper surface of the LTPS glass substrate, and the second electrode plate is the front housing of the display screen. In FIG. 9, the display screen is an AMOLED display screen, the first electrode plate is constituted by coating or printing an electrode material on a lower surface of the LTPS glass substrate, and the second electrode plate is the front housing of the display screen. A pressure value calculation method is described above, and details are not described herein again.

According to the display screen provided in this embodiment of the present invention, the first electrode plate is constituted by coating or printing the electrode material on the surface of the glass substrate, and the front housing of the display screen or the iron frame is used as the second electrode plate. The first electrode plate and the second electrode plate constitute a capacitor. When the display screen is externally pressed, the controller may calculate the changed capacitance value based on the change of the distance between the two electrode plates, and calculate pressure based on the changed capacitance value. The first electrode plate is disposed as an electrode material on the glass substrate, so that a material used for separately disposing a pressure sensor can be saved. The electrode material is coated or printed on the substrate, so that a thickness of the display screen can be reduced. Further, an injection iron frame and an iron frame that are used for fixation are not required in the display screen, so that the thickness of the display screen is further reduced.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementations, the objective, technical solutions, and benefits of the present invention are further described in detail. It should be understood that the foregoing descriptions are merely specific implementations of the present invention, but are not intended to limit the protection scope of the present invention. Any modification, equivalent replacement, or improvement made without departing from the spirit and principle of the present invention should fall within the protection scope of the present invention.

**Claims**

1. A display screen, comprising a glass substrate, wherein the display screen further comprises:

    a first electrode plate disposed on a surface of the glass substrate;
    a second electrode plate disposed below the glass substrate, wherein the first electrode plate and the second electrode plate constitute a capacitor, and there is a space within a preset width range between the first electrode plate and the second electrode plate, so that when external pressure is applied to the display screen, the first electrode plate is elastically deformed; and
    a controller, connected to the first electrode plate and configured to: when external pressure is applied to the display screen, calculate a changed capacitance value of the capacitor based on a change of a space between the first electrode plate and the second electrode plate; and cal-

**EP 3 486 755 A1**

culate a pressure value based on the changed capacitance value.

2. The method according to claim 1, wherein the width range of the space between the first electrode plate and the second electrode plate is greater than or equal to 0.2 mm and less than or equal to 2.5 mm.

3. The method according to claim 1 or 2, wherein the space between the first electrode plate and the second electrode plate is air, or filled with a substance that does not hinder elastic deformation of the first electrode plate.

4. The display screen according to claim 1, wherein an electrode material is coated or printed on the surface of the glass substrate, to constitute the first electrode plate.

5. The display screen according to claim 1, wherein the second electrode plate is a front housing of the display screen or an iron frame of a liquid crystal display module LCM of the display screen.

6. The display screen according to any one of claims 1 to 5, wherein there are at least two first electrode plates, and each electrode plate and the second electrode plate constitute a capacitor.

| | | | | |
|---|---|---|---|---|
| | Touchscreen cover | | | |
| | Optical clear adhesive | | | |
| | Upper polarizer | | First electrode plate | |
| | Color light filter | | | |
| | Glass substrate | | | |
| | Lower polarizer | | Spacing | |
| | Backlight module | | Second electrode plate | |
| | Injection molding iron frame | | | |
| | Liquid crystal display support iron frame | | | |

FIG. 1

FIG. 2

First electrode plate 102

$\Delta d$    First electrode plate 102

Second electrode plate 103    Second electrode plate 103

FIG. 3

| Touchscreen cover |
| Optical clear adhesive |
| Upper polarizer |
| Color light filter |
| Thin film transistor glass substrate |
| Lower polarizer |
| Backlight module |
| Front housing (GND) |

First electrode plate

Spacing

Second electrode plate

FIG. 4

FIG. 5

| Touchscreen cover |
| Optical clear adhesive |
| Upper polarizer |
| Color light filter |
| Thin film transistor glass substrate |
| Lower polarizer |
| Backlight module |
| Injection molding iron frame (GND) |
| Front housing |

First electrode plate

Spacing

Second electrode plate

Touchscreen cover

Optical clear adhesive

Upper polarizer

Color light filter

First electrode plate

Thin film transistor glass substrate

Lower polarizer

Spacing

Backlight module

Second electrode plate

Injection molding iron frame (GND)

Front housing

FIG. 6

FIG. 7

| | |
|---|---|
| Touchscreen cover | |
| Optical clear adhesive | |
| Polarizer | |
| Packaging glass | |
| Low temperature poly-silicon glass substrate | First electrode plate |
| Foam or air layer | |
| Front housing (GND) | Second electrode plate |

FIG. 8

Touchscreen cover

Optical clear adhesive

Polarizer

Packaging glass

Low temperature poly-silicon glass substrate

First electrode plate

Foam or air layer

Front housing (GND)

Second electrode plate

FIG. 9

# INTERNATIONAL SEARCH REPORT

| International application No. |
| --- |
| PCT/CN2016/093886 |

**A. CLASSIFICATION OF SUBJECT MATTER**

G06F 3/041 (2006.01) i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC: 显示屏, 触摸屏, 玻璃, 电极板, 电容, 压力, 形变, touch, capacitor, glass, sense+, screen

**C. DOCUMENTS CONSIDERED TO BE RELEVANT**

| Category* | Citation of document, with indication, where appropriate, of the relevant passages | Relevant to claim No. |
| --- | --- | --- |
| X | CN 205015863 U (NANCHANG O-FILM TECH CO., LTD. et al.) 03 February 2016 (03.02.2016), description, paragraphs [0025]-[0047], and figures 1-9 | 1-6 |
| A | CN 204759381 U (SHENZHEN GOODIX TECHNOLOGY CO., LTD.) 11 November 2015 (11.11.2015), entire document | 1-6 |
| A | CN 102004573 A (SHENZHEN GOODIX TECHNOLOGY CO., LTD.) 06 April 2011 (06.04.2011), entire document | 1-6 |
| A | US 2015184989 A1 (SAMSUNG ELECTRO-MECHANICS CO., LTD.) 02 July 2015 (02.07.2015), entire document | 1-6 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 April 2017 | 10 May 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>CHEN, Long<br><br>Telephone No. (86-10) 62414006 |

Form PCT/ISA /210 (second sheet) (July 2009)

<table>
<thead>
<tr><th colspan="2">**INTERNATIONAL SEARCH REPORT**<br>Information on patent family members</th><th colspan="2">International application No.<br>PCT/CN2016/093886</th></tr>
</thead>
<tbody>
<tr><td>Patent Documents referred<br>in the Report</td><td>Publication Date</td><td>Patent Family</td><td>Publication Date</td></tr>
<tr><td>CN 205015863 U</td><td>03 February 2016</td><td>None</td><td></td></tr>
<tr><td>CN 204759381 U</td><td>11 November 2015</td><td>None</td><td></td></tr>
<tr><td>CN 102004573 A</td><td>06 April 2011</td><td>CN 102004573 B</td><td>01 January 2014</td></tr>
<tr><td>US 2015184989 A1</td><td>02 July 2015</td><td>KR 101512571 B1</td><td>15 April 2015</td></tr>
</tbody>
</table>

Form PCT/ISA /210 (patent family annex) (July 2009)